# EUROPEAN PATENT SPECIFICATION

(11) **EP 2 940 934 B1**
(45) Date of publication and mention of the grant of the patent: **11.04.2018**
(21) Application number: 14305624.0
(22) Date of filing: 28.04.2014
(51) Int. Cl.: H04L 12/28, H04M 11/06

(54) **Distribution point unit, and method and system for data transmission over a wired shared medium to a plurality of users**
Verteilungspunkteinheit und Verfahren und System zur Datenübertragung über ein verdrahtetes gemeinsam genutztes Medium zu mehreren Benutzern
Unité de point de distribution et procédé et système de transmission de données sur un support partagé câblé à une pluralité d'utilisateurs

(43) Date of publication of application: 04.11.2015
(73) Proprietor: ALCATEL LUCENT, 92100 Boulogne-Billancourt (FR)
(72) Inventor: Maes, Jochen, 2018 Antwerpen (BE)
(74) Representative: Nokia Bell Patent Attorneys

(56) References cited:
- EP-A1- 1 005 217
- US-A1- 2009 252 069
- US-B1- 6 498 806
- US-B1- 6 975 585
- CHOW P S ET AL: "A multi-drop in-house ADSL distribution network", COMMUNICATIONS, 1994. ICC '94, SUPERCOMM/ICC '94, CONFERENCE RECORD, ' SERVING HUMANITY THROUGH COMMUNICATIONS.' IEEE INTERNATIONAL CONFERENC E ON NEW ORLEANS, LA, USA 1-5 MAY 1994, NEW YORK, NY, USA,IEEE, 1 May 1994 (1994-05-01), pages 456-460, XP010126562, DOI: 10.1109/ICC.1994.368862 ISBN: 978-0-7803-1825-0

## Description

### Field of Invention

The field of the invention relates to data transmission over a wired shared medium between one ore more distribution point units and a plurality of users. Particular embodiments relate to the field of G.fast and discrete multi-tone technology.

### Background

xDSL is an access technology family designed for point-to-point communication between a central unit, such as a distribution point unit (DPU), and a customer-premises equipment (CPE). In prior art solutions, the communication between a DPU and multiple CPE's takes place over multiple xDSL lines. Recently there has been some interest in access over coax in multi-dwelling units. In certain implementations, the coax topology is point-to-point (e.g. from the basement) such that xDSL can be used. However often, the coax topology is point-to-multipoint (e.g. from the last amplifier) which prohibits the efficient use of xDSL.

US 2009/252069 A1 discloses a point-to-multipoint network system using an in-house telephone line, including a master modem and multiple slave modems. The master modem allocates a first (downstream) bandwidth and a second (upstream) bandwidth (each potentially including non-contiguous frequency spaces). The slave modems respectively communicate with the master modem through the first and second bandwidths by using the in-house telephone line.

US 6 975 585 B1 discloses slotted synchronous FDM for multi-drop networks, for permitting selection of the frequency band to use for transmission, thus dealing with channel nulls and requiring no channel equalization.

### Summary

The object of embodiments of the invention is to provide a DPU, CPE, method and system allowing data transmission over a wired shared medium, for example a coaxial cable, from at least one DPU to a plurality of users. A DPU is understood to be a unit at a location where signals are distributed to multiple CPEs. Examples of distribution point locations include a central office, a cabinet, a manhole, a telephone pole, a wall, or a basement.

According to a first aspect of the invention there is provided a DPU according to claim 1.

The term "portion" may refer to a plurality of sub portions which are not necessarily adjacent portions and which may be overlapping portions.

Embodiments of the invention are based inter alia on the insight that DMT technology can be used in a wired shared medium by assigning portions of the available spectrum to a plurality of users. The use of DMT in combination with the assigning of portions of the spectrum is superior over time-division multiplexing techniques, since the latter is characterized by the entire frequency spectrum being allocated to a single user within a certain time-slot, even if that user has insufficient signal-to-noise ratio (SNR) to fully utilize the spectrum. For example, the usable spectrum on a coaxial cable is of the order of 1 GHz.

According to an embodiment of the invention, the assigned first portion of the available spectrum comprises at least two sub portions, a first downstream sub portion for downstream digital data traffic and a first upstream sub portion for upstream digital data traffic, and the assigned second portion of the available spectrum comprises at least two sub portions, a second downstream sub portion for downstream digital data traffic and a second upstream sub portion for upstream digital data traffic. In such an embodiment said first downstream sub portion does not overlap with said second downstream sub portion and said first upstream sub portion does not overlap with said second upstream sub portion.

In a further embodiment the first assigned and second assigned portions can both be divided in two different first and second sub portions. In this way the sub portion being used for downstream traffic can be different from the sub portion being used for upstream traffic. However, generally, within an assigned portion, the two sub portions may or may not (partially) overlap.

According to an embodiment of the invention, the assigned first portion does not overlap with the assigned second portion. In such an embodiment, the entire assigned first portion and assigned second portion may be used for downstream and upstream digital data traffic.

In a further embodiment, the assigning unit is configured for setting a gain of at least one carrier included in the assigned first portion to a first predetermined value, and for setting a gain of at least one carrier outside the assigned first portion to a second predetermined value, in order to indicate the range of the assigned first portion to the first user.

According to a preferred embodiment, the assigning unit is configured for modifying the first assigned portion and/or the second assigned portion. By using frequency-division multiplexing, assigned portions of the spectrum can be re-assigned flexibly if necessary. This embodiment has particular advantages over time-division multiplexing solutions which only provide a limited flexibility to re-assign timeslots between users, depending on traffic load.

In a further embodiment of the invention, the assigning unit is configured for collecting input data, which preferably comprises signal-to-noise ratio parameters and/or data rate demands, from at least the first and the second user of the plurality of users. This input data can then be used for modifying the first and/or second portion of the spectrum based on the collected input data.

In an exemplary embodiment the assigning unit is configured for initially assigning a first portion and a second portion of a predetermined initialization band of the available spectrum to a first user and a second user, respectively, and for subsequently modifying the assigned first and second portion to another first and second portion outside the predetermined initialization band. To allow a fast initial assignment, in an exemplary embodiment a predefined portion of the spectrum is reserved for lines to enter initialization. This initialization process will occur on a limited tone set. Since it is undesirable to limit the available portions of a user to this limited tone set, reassignment of portions of that particular user, after initialization, may be performed. By using such a reserved part of the spectrum for joining users, the DPU does not have to interfere with the portions assigned to the current users each time a new user is introduced. This approach avoids time being wasted while spectrum of current users is being freed up.

According to an exemplary embodiment, the assigning unit is configured for selecting a set of pilot tones, for sending said set of pilot tones to said plurality of users, and for receiving from said plurality of users a selection of said set. To facilitate loop timing, the DPU may select a set of pilot tones, from which users can select one or more pilot tones themselves. The pilot tones may be set during initialization and are maintained fixed afterwards. This approach guarantees that only a limited amount of bandwidth is occupied by pilot tones. In prior art systems on the contrary, each user can select a set of pilot tones, independently from other users. If we assume a prior art system of 8 users, each selecting a set of 16 pilot tones, a total of 126 different pilot tones is to be used. In a DPU according to the exemplary embodiment e.g. a set of 16 pilot tones may be selected, from which all 8 users should select their set of pilot tones, so that only a total of 16 different pilot tones may be used, which will allow more bandwidth to be available for data traffic. With regard to synchronizing the transmission of different users in upstream, all CPE's may be locked to the clock of the DPU. Notwithstanding this synchronizing, some differences in timing between CPE's may exist, but the differences are small enough to fall within the cyclic extension such that inter-symbol interference (ISI) and inter-carrier interference (ICI) are avoided.

In a further developed embodiment the assigning unit is configured for assigning in a first step an intermediate band of the available spectrum to said first user and said second user and for assigning in a second step a first portion of said intermediate band to the first user and a second portion of said intermediate band to the second user. In that way the spectrum can be divided first in a number of intermediate bands, wherein each intermediate band is reserved for a group of a plurality of users. It is noted that the assigning of the intermediate bands may be performed by a separate intermediate assigning module which is configured to assign a first intermediate band to a first DPU, a second intermediate band to a second DPU, etc, wherein the first and second DPU are connected to the same wired shared medium. The first DPU may then have a first assignment module to perform the assigning of different portions of the first intermediate band to a plurality of users connected to the first DPU. Similarly, the second DPU may have a second assignment module to perform the assigning of different portions of the second intermediate band to a plurality of users connected to the second DPU.

In an exemplary embodiment the wired shared medium is a coaxial line. The available GHz spectrum on a coaxial link is wider than any xDSL technology available at present. According to an embodiment, the GHz spectrum can be fully addressed by xDSL through separation into multiple intermediate frequency blocks in the order of e.g. 100 MHz wide. In an exemplary embodiment the initial assigning of a portion of the available spectrum takes place in two steps. In a first step, the assigning unit assigns an intermediate frequency block to the initializing user. This intermediate frequency block may be assigned permanently, and may not be re-configured seamlessly. However, in other embodiments this intermediate frequency block may be reconfigurable. In a second step, the assigning unit assigns the initializing user a portion of the available spectrum in the intermediate frequency block. This portion of available spectrum may be assigned temporarily, and may be re-configured seamlessly after initialization.

According to another aspect of the invention there is provided a method according to claim 8.

In an embodiment the assigned first portion of the available spectrum comprises at least two sub portions, a first downstream sub portion for downstream digital data traffic and a first upstream sub portion for upstream digital data traffic. Likewise, the assigned second portion of the available spectrum comprises at least two sub portions, a second downstream sub portion for downstream digital data traffic and a second upstream sub portion for upstream digital data traffic. Said first downstream sub portion does not overlap with said second downstream sub portion and said first upstream sub portion does not overlap with said second upstream sub portion.

In a preferred embodiment the method comprises setting a gain of at least one carrier included in the assigned first portion to a first predetermined value, and setting a gain of at least one carrier outside the assigned first portion to a second predetermined value, in order to indicate the range of the assigned first portion to the first user.

In a further embodiment of the invention, the method further comprises collecting input data, from at least the first and the second user of the plurality of users and modifying the first portion and/or the second portion based on the collected input data. Such input data preferably comprises signal-to-noise ratio parameters and/or data rate demands.

In an exemplary embodiment the method comprises initially assigning a first portion and a second portion of a predetermined initialization band of the spectrum to a first user and a second user, respectively, and subsequently modifying the assigned first and second portion to another first and second portion outside the predetermined initialization band.

In an exemplary embodiment existing G.fast standard functionality may be exploited for initially assigning a first portion of the available spectrum to a first user. To ensure that any part of the spectrum can be reassigned flexibly, the following procedure may be followed:
- Define a reference PSD mask MREFPSDMASK over the full spectrum;
- Use an actual MREFPSD, falling below the reference PSD mask, on the portion of the spectrum assigned initially;
- Use transmitter initiated gain adjustment (TIGA) to re-assign carriers after initial assignment.

In an exemplary embodiment reassigning using TIGA can be done as follows:
- Use TIGA to extend a bandwidth portion to previously unused carriers. This is done by setting the gain adjuster to a predefined first value which the CPE understands to mean that this carrier will become a monitored tone. Once the CPE has built up its frequency equalizer (FEQ) for this carrier, it will request bitloading.
- Use TIGA to vacate carriers that the DPU wishes to reassign to another user. This is done by setting the TIGA gain adjuster to zero on those carriers.

In a further developed embodiment the assigning comprises assigning in a first step an intermediate band of the available spectrum to the first user and the second user and assigning in a second step a first portion of said intermediate band to the first user and a second portion of said intermediate band to the second user. In that way the spectrum can be divided first in a number of intermediate bands, wherein each intermediate band can be reserved for a group of a plurality of users.

In an exemplary embodiment the wired shared medium is a coaxial line having a spectrum of e.g. between 1 and 2 GHz. According to an embodiment, the GHz spectrum can be fully addressed by xDSL through separation into multiple intermediate frequency blocks in the order of e.g. 100 MHz or 200 MHz wide. In an exemplary embodiment the initial assigning of a portion of the available spectrum takes place in two steps. In a first step, an intermediate frequency block is assigned to the initializing user. This intermediate frequency block may be assigned permanently, and may not be re-configured seamlessly. However, in other embodiments this intermediate frequency block may be reconfigurable. In a second step, the initializing user is assigned a portion of the intermediate frequency block. This portion may be assigned temporarily, and may be re-configured seamlessly after initialization.

According to another aspect of the invention there is provided a customer premises equipment (CPE) according to claim 11.

In a further embodiment the CPE is further configured for receiving from the DPU a set of pilot tones, for selecting at least one pilot tone of said set, and sending the at least one selected pilot tone to the DPU.

In an exemplary embodiment the CPE is configured for being assigned a portion of the available spectrum by: receiving gain adjuster data of a carrier from the DPU, placing said carrier in a monitored tone set if said received gain adjuster data fulfills a predetermined criterion indicating that the carrier is with the portion to be assigned; building up a frequency equalizer for said carrier; and requesting bitloading for said carrier.

In an exemplary embodiment the CPE is configured for being initially assigned a portion of a predetermined initialization band of the available spectrum, and for subsequently being assigned another portion outside the predetermined initialization band.

In a further developed embodiment the CPE is configured for being assigned in a first step an intermediate band of the spectrum and for being assigned in a second step a portion of said intermediate band. In that way the spectrum can be divided first in a number of intermediate bands, wherein each intermediate band can be reserved for a group of a plurality of CPE's.
In a particular embodiment, the CPE is configured for being assigned a portion of the spectrum through a two-step initialization process. In a first step, the CPE handshakes with the DPU on a limited first set of tones. The CPE may be configured for being permanently assigned an intermediate frequency block during this first step. In a second step, the CPE is configured for being assigned a portion of available spectrum within the intermediate frequency block, and to perform training on the assigned portion comprising channel discovery, and/or analysis and/or exchange, whereupon the assigned portion may be modified by the DPU.

In an exemplary embodiment, the CPE is further configured for collision avoidance. Multiple CPEs may attempt to establish handshake or initialization with the DPU on the wired shared medium. The CPE may delay its own handshake or initialization when it senses that another handshake or initialization is ongoing with another CPE. If a collision occurs between handshake or initialization signals from multiple CPEs, the CPE will delay its own handshake or initialization by a randomly generated delay. To further mitigate the effect of collisions, the CPE may send a unique user identification to the DPU, that will be used by the DPU to indicate the intended recipient of its messages.
According to another aspect of the invention there is provided a system comprising at least one DPU, a wired shared medium, preferably a coaxial cable, and a plurality of CPE's wherein the wired shared medium connects the at least one DPU to the plurality of CPE's.

According to a further aspect of the invention, there is provided a digital data storage medium, encoding a machine-executable program of instructions to perform any one of the steps of any one of the embodiments disclosed above.

According to a further aspect of the invention, there is provided a computer program comprising computer-executable instructions to perform, when the program is run on a computer, any one of the steps of any one of the embodiments of the method disclosed above.

According to a further aspect of the invention, there is provided a computer device or other hardware device programmed to perform one or more steps of any one of the embodiments of the method disclosed above. According to another aspect there is provided a data storage device encoding a program in machine-readable and machine-executable form to perform one or more steps of any one of the embodiments of the method disclosed above.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates schematically an exemplary embodiment of a DPU according to the invention;
Figures 2A-2B illustrate that in an exemplary embodiment of the invention different portions of the available spectrum can be assigned for downstream and upstream traffic;
Figures 3A-3B illustrate that in an exemplary embodiment of the invention, a predetermined portion of the spectrum is reserved for joining new users;
Figures 4A-4B illustrate how in an exemplary embodiment of the invention, portions of the available spectrum are reassigned, based on input data, collected by the assigning unit.

### Description of embodiments

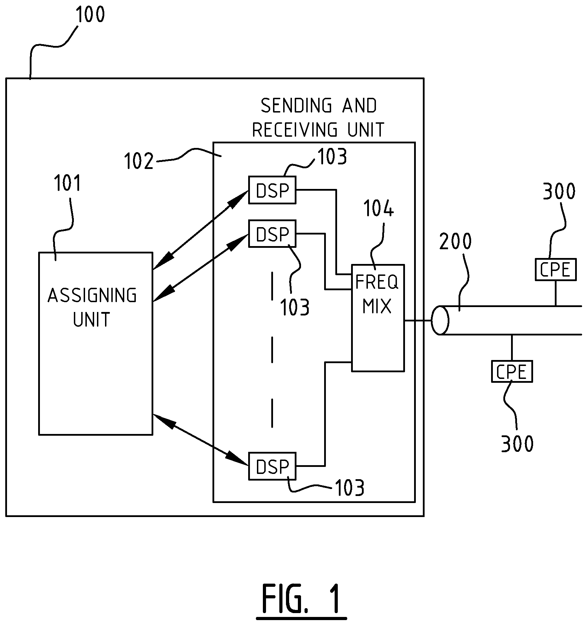

Figure 1 illustrates a distribution point unit (DPU) 100 using discrete multi-tone (DMT) technology. The DPU 100 is configured for connection to a wired shared medium 200, associated with an available spectrum. Wired shared medium 200 connects DPU 100 with a plurality of users (CPE's) 300. DPU 100 comprises an assigning unit 101, configured for assigning a first portion of the available spectrum to a first user of said plurality of users and a different second portion of the available spectrum to a second user of said plurality of users. DPU 100 further comprises a sending and receiving unit 102, configured for encoding and decoding digital data, using DMT technology. The sending and receiving unit 102 is further configured for sending and receiving encoded digital data over the at least assigned first portion to/from the first user and over the at least assigned second portion to/from the second user.

In an embodiment of the invention, the assigning unit 101 first performs an initial assignment of a first portion of the spectrum to a first user 300. This initial assignment establishes a link between a predefined part of the spectrum and the particular user 300. During this initial assignment, the user 300 is told by the assigning unit 101, which part of the spectrum is assigned to him, i.e. which part of the spectrum should be monitored by that particular user 300. During the initial assignment the user 300 is told also which part of the spectrum does not apply to him, i.e. which part of the spectrum may be ignored by that particular user 300. To establish the initial assignment, the DPU 100 sends out a signal, containing information about the assigned part of the spectrum. This initial signal further comprises a user identifier which is recognized by the particular user 300. In that way the user 300 recognizes this signal as a signal intended for him. From this point onwards, the user 300 has been assigned a portion of the spectrum, and knows that this portion is to be monitored to receive data. After initial assignment, the DPU 100 may send signals without user identifier to the user in the assigned band, since there is now an exclusive line between the DPU 100 and the user 300. Any information or data, that is to be sent by the DPU 100 to the user 300 can be sent over the assigned portion of the spectrum, and the user 300 will know that this data is intended for him.

In an exemplary embodiment the assigned portion allows both downstream (DPU to user) and upstream (user to DPU) traffic. By monitoring the traffic between the DPU 100 and a user 300, the assigning unit 101 is able to receive input data for that particular user. This input data may comprise for example signal-to-noise ratio (SNR) parameters. The input data can also be acquired by certain user settings which inform the DPU about preferences of a certain user. Based on this input data the assigning unit may perform a reassignment of already assigned portions of the spectrum. For example, if a user is located far away from the DPU and therefore has a lower SNR, the assigning unit can reassign a lower portion of the spectrum to this particular user, in order to provide a good quality signal. Another example of a beneficial reassignment is when, based on the traffic between the DPU 100 and the user 300, it is clear that the user is a heavy downloader, and the assigning unit 101 reassigns a broader portion for downstream traffic to that particular user. All communications between DPU 100 and user 300, concerning reassignment, take place over the currently assigned portion(s) for that particular user.

In an exemplary embodiment of the invention, the sending and receiving unit 102 comprises a multitude of digital signal processors (DSP's) 103, which are controlled by the assigning unit 101 and are connected to the wired shared medium 200, preferably a coaxial cable, by means of a frequency multiplexer 104. The DSP's 103 are typically configured for performing following tasks regarding the sending of data:
- data encoding, such as framing, scrambling, error correction encoding and interleaving,
- signal modulation, comprising the steps of ordering the carriers according to a carrier ordering table, parsing the encoded bit stream according to the bit loadings of the ordered carriers, and mapping each bitword onto an appropriate transmit constellation point (with respective carrier amplitude and phase),
- signal scaling,
- Inverse Fast Fourier Transform (IFFT)
- Cyclic Prefix (CP) insertion, and
- time-windowing.
In another embodiment the frequency multiplexing operation may be implemented in the digital domain and can encompass the IFFT operation. In this case, each DSP 103 sends its scaled frequency components to the frequency multiplexer 104 that comprises the IFFT, CP insertion and windowing operations.
The DSP's 103 are typically further configured for performing following tasks regarding the receiving of data:
- time-domain signal equalization,
- Cyclic Prefix (CP) removal,
- Fast Fourier Transform (FFT),
- frequency-domain signal equalization,
- signal demodulation and detection, comprising the steps of applying to each and every equalized frequency sample an appropriate constellation grid, the pattern of which depends on the respective carrier bit loading, detecting the expected transmit constellation point and the corresponding transmit bit sequence, and re-ordering all the detected bitwords according to the carrier ordering table,
- data decoding, such as data de-interleaving, RS decoding (byte errors, if any, are corrected during this step), de-scrambling, and frame delineation.
In another embodiment the frequency de-multiplexing operation may be implemented in the digital domain and can encompass the FFT operation. In this case, each DSP 103 receives unequalized frequency domain signals from the frequency de-multiplexer comprising time equalization, CP removal, and FFT operation.

In an exemplary embodiment of the invention, initial assignment of a first portion of the available spectrum to a first user is achieved by providing a robust management channel (RMC) symbol (cf. G.fast standard) which contains information about the portion of the spectrum, to be assigned to the user. For initial assignment the RMC symbol also contains a user identifier, such that the particular user is assigned a predefined portion of the spectrum. Use of the RMC prevents other users, connected to the wired shared medium, from picking up data, not intended for them. The tone ordering table may be set at initial assignment and kept fixed afterwards. The RMC tone set may include the first tones in the tone re-ordering table. However this RMC tone set may be expanded or decreased after initial assignment if needed. Hence, when the first tones in the tone ordering table are not allocated to a user, the effective RMC tones will be the first active tones in the tone ordering table.

In an embodiment of the invention, the assigning unit can make use of existing G.fast protocols such as Transmitter Initiated Gain Adjustment (TIGA) in order to configure the association between users and the corresponding portions of the spectrum.

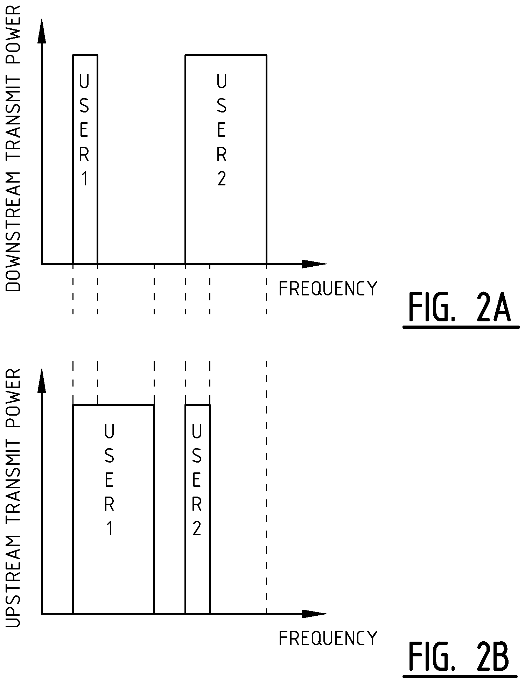

Figures 2A-2B illustrate that the assigned first portion of the available spectrum may comprise two sub portions, one first sub portion for downstream digital data traffic and one first sub portion for upstream digital data traffic and wherein the assigned second portion of the available spectrum comprises at least two sub portions, one second sub portion for downstream digital data traffic and one second sub portion for upstream digital data traffic.

In an embodiment of the invention, different assignments can be applied down- and upstream. Figure 2A shows the downstream transmit power of two users 1 and 2 of which user 2 is a heavy downloader. Figure 2B shows the upstream transmit power of the same two users 1 and 2 of which user 1 is a heavy uploader. The dotted lines show that the first sub portions assigned to the first user for downstream and upstream traffic respectively can (partially) overlap. Likewise both second sub portions of the second assigned portion can overlap. The first and second assigned portions of the first and second user however do not overlap, and are two different parts of the spectrum. It is noted that in another embodiment the second downstream sub portion may overlap with the first upstream sub portion (but not with the first downstream sub portion), and that the first downstream sub portion may overlap with the second upstream sub portion (but not with the second downstream sub portion). Also, it is clear for the person skilled in the art, that although Figures 2A-2B show that each assigned portion is divided in two different sub portions, this is not necessary. It is also possible that for an assigned portion, the two sub portions are actually the same and hence the entire assigned portion is used for both downstream and upstream data traffic. Another possible layout of an assigned portion is that it comprises a plurality of sub portions for downstream or upstream traffic which are not necessarily adjacent portions and which may be overlapping portions.

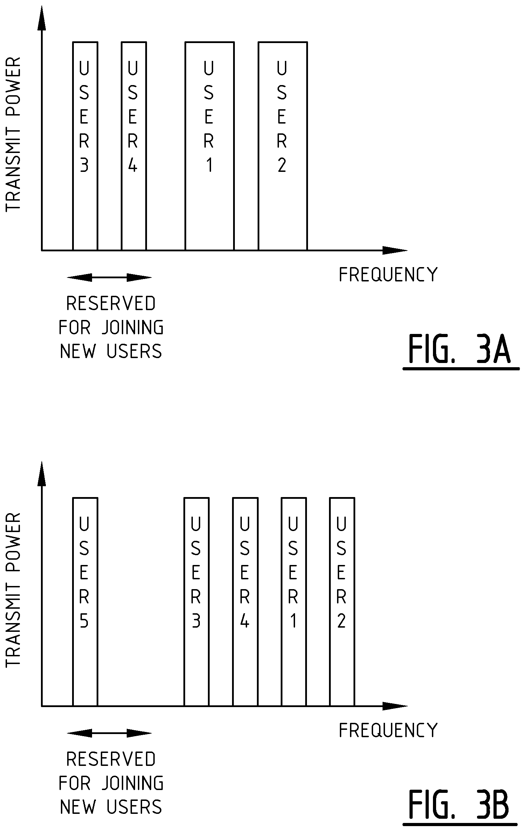

Figures 3A and 3B illustrate a preferred embodiment of the invention wherein a predefined first portion of the available spectrum is reserved for initial assignment to a first user of the plurality of users. To allow a fast initial assignment, it is recommended that a predefined portion of the spectrum is reserved for lines to enter initialization. This initialization process will occur on a limited tone set. Since it is undesirable to limit the available portions of a user to this limited tone set, reassignment of portions of that particular user, after initialization, is required. Fig 3A shows two joining users 3 and 4, each being initially assigned a portion of a predetermined, reserved lower part of the spectrum. By using such a reserved part of the spectrum for joining users, the DPU does not have to interfere with the portions assigned to the current users 1 and 2 each time a new user is introduced. This approach avoids time being wasted while spectrum of current users, is being freed up. Figure 3B illustrates that at a later point in time, while a new user 5 is introduced for initialization, users 3 and 4 have already been reassigned other portions of the spectrum, formerly (partly) assigned to users 1 and/or 2, outside of the reserved part of the spectrum for joining lines.

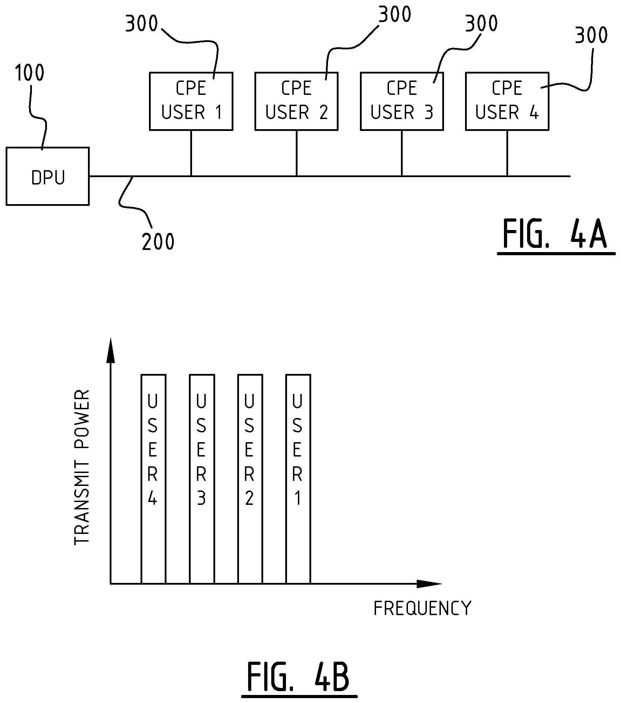

Figures 4A and 4B illustrate the use of input data in an embodiment of the invention. Figure 4A illustrates a DPU 100, connected to four users 300, located at different distances from the DPU 100, by means of a wired shared medium 200, preferably a coaxial cable. In figure 4A user 1 is located closest to the DPU 100, while user 4 is located furthest from the DPU 100. The distance between DPU 100 and user 300 is proportional to the signal-to-noise ratio (SNR) for a particular user 300. Figure 4B illustrates the reassigned portions of the spectrum to the four users. Based on the SNR profile of the users at different distances from the DPU 100, the DPU 100 has reassigned the lower portions of the spectrum to user 4 since this user is located furthest from the DPU 100. Accordingly, user 1, located closest to the DPU, has been assigned the higher portion of the spectrum.

In an exemplary embodiment the wired shared medium may be a coaxial line having a spectrum of 1.2 GHz. E.g. 64 users may be connected to the coaxial line. In such a set-up there may be provided eight DPU's, i.e. one DPU for eight users. Each DPU may then be attributed an intermediate band of the spectrum, and portions of each intermediate band may then be flexibly assigned to the eight users connected to associated DPU.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "units", "processors" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. A distribution point unit (100) using discrete multi-tone technology, said distribution point unit being configured for connection to a wired shared medium (200) associated with an available spectrum, said wired shared medium connecting said distribution point unit with a plurality of users (300), said distribution point unit comprising:
- an assigning unit (101) configured for assigning a first portion of the available spectrum to a first user of said plurality of users and a second portion of the available spectrum to a second user of said plurality of users;
- a sending and receiving unit (102) configured for encoding and decoding digital data, using discrete multi-tone technology, and configured for sending and receiving encoded digital data over the assigned first portion to/from the first user and over the assigned second portion to/from the second user;
**characterized in that** the assigning unit is configured for initially assigning a first portion and a second portion of a predetermined initialization band of the available spectrum to a first user and a second user, respectively, and for subsequently modifying the assigned first and second portion to another first and second portion outside the predetermined initialization band.

2. The distribution point unit according to claim 1, wherein the assigned first portion does not overlap with the assigned second portion; and wherein the assigned first portion and assigned second portion are used for downstream and upstream digital data traffic.

3. The distribution point unit according to any one of the claims 1-2, wherein the assigning unit is configured for setting a gain of at least one carrier included in the assigned first portion to a first predetermined value, and for setting a gain of at least one carrier outside the assigned first portion to a second predetermined value, in order to indicate the range of the assigned first portion to the first user.

4. The distribution point unit according to any one of the claims 1-3, wherein the assigning unit is configured for receiving from at least one user of said plurality of users a unique user identification; and wherein said assigning unit is configured for performing said initial assigning by providing a robust management channel (RMC) symbol to said user, said RMC symbol containing a user identifier based on said unique user identification, which user identifier is recognizable by said at least one user, such that said at least one user is assigned a predefined portion of the spectrum.

5. The distribution point unit according to any one of the previous claims, wherein the assigning unit is configured for modifying the assigned first portion and/or the assigned second portion; wherein the assigning unit is preferably configured for collecting input data, which preferably comprises signal-to-noise ratio parameters and/or data rate demands, from the first and the second user of the plurality of users, and for modifying the assigned first and/or second portion of the spectrum based on the collected input data.

6. The distribution point unit according to any one of the previous claims, wherein the assigning unit is configured for assigning in a first step an intermediate band of the available spectrum to said first user and said second user and for assigning in a second step a first portion of said intermediate band to the first user and a second portion of said intermediate band to the second user.

7. The distribution point unit according to any one of the previous claims, wherein the assigning unit is configured for selecting a set of pilot tones, for sending said set of pilot tones to said plurality of users.

8. A method for using discrete multi-tone technology in connection with a wired shared medium associated with an available spectrum, which is connected with a plurality of users (300), comprising;
- assigning a first portion of the available spectrum to a first user of said plurality of users and a second portion of the available spectrum to a second user of said plurality of users;
- encoding and decoding digital data, using discrete multi-tone technology;
- sending and receiving encoded digital data over the first portion to/from the first user and over the second portion to/from the second user;
**characterized in that** said assigning comprises initially assigning a first portion and a second portion of a predetermined initialization band of the spectrum to a first user and a second user, respectively; and subsequently modifying the assigned first and second portion to another first and second portion outside the predetermined initialization band.

9. The method according to claim 8, further comprising receiving from at least one user of said plurality of users a unique user identification; and wherein said initial assigning comprises providing a robust management channel (RMC) symbol to said user, said RMC symbol containing a user identifier based on said unique user identification, which user identifier is recognizable by said at least one user, such that said at least one user is assigned a predefined portion of the spectrum.

10. The method according to claim 8 or 9, further comprising collecting input data from at least the first and the second user of the plurality of users and modifying the first portion and/or the second portion based on the collected input data.

11. A customer premises equipment (300) for being connected through a wired shared medium with a distribution point unit (100), said customer premises equipment being configured for
- being assigned a portion of the available spectrum by said distribution point unit;
- encoding and decoding digital data, using discrete multi-tone technology; and
- sending and receiving encoded digital data over the assigned portion to/from the distribution point unit; and
**characterized by** being configured for being initially assigned a portion of a predetermined initialization band of the available spectrum; and being subsequently assigned another portion outside the predetermined initialization band.

12. The customer premises equipment according to claim 11, further being configured for sending a unique user identification to said distribution point unit; and for recognizing a user identifier based on a unique user identification in a signal from said distribution point unit.

13. The customer premises equipment according to claim 11 or 12, further being configured for receiving from the distribution point unit a set of pilot tones, for selecting at least one pilot tone of said set; and/or
wherein the customer premises equipment is configured for being assigned a portion of the available spectrum by: receiving gain adjuster data of a carrier from the DPU, placing said carrier in a monitored tone set if said received gain adjuster data fulfills a predetermined criterion indicating that the carrier is with the portion to be assigned; building up a equalizer for said carrier; and requesting bitloading for said carrier.

14. A system comprising at least one distribution point unit according to any one of the claims 1-7, a wired shared medium, preferably a coaxial cable, and a plurality of customer premises equipment according to any one of the claims 11-13, wherein the wired shared medium connects the at least one distribution point unit to the plurality of customer premises equipment.

15. A digital data storage medium encoding a machine-executable program of instructions to perform any one of the steps of the method of any one of the claims 8-10.

## Patentansprüche

1. Verteilungspunkteinheit (100) unter Verwendung diskreter Mehrtontechnologie, wobei die besagte Verteilungspunkteinheit für die Verbindung mit einem verdrahteten, gemeinsam genutzten Medium (200) ausgelegt ist, das zu einem verfügbaren Spektrum zugehörig ist, wobei das besagte verdrahtete, gemeinsam genutzte Medium die besagte Verteilungspunkteinheit mit einer Vielzahl von Benutzern (300) verbindet, die besagte Verteilungspunkteinheit umfassend:
- eine Zuweisungseinheit (101), die zum Zuweisen eines ersten Abschnitts des verfügbaren Spektrums zu einem ersten Benutzer der besagten Vielzahl von Benutzern und eines zweiten Abschnitts des verfügbaren Spektrums zu einem zweiten Benutzer der besagten Vielzahl von Benutzern ausgelegt ist;
- eine Sende- und Empfangseinheit (102), die zum Codieren und Decodieren von digitalen Daten ausgelegt ist, unter Verwendung diskreter Mehrtontechnologie, und die zum Senden und Empfangen von codierten digitalen Daten über den zugewiesenen ersten Abschnitt zu/von dem ersten Benutzer und über den zugewiesenen zweiten Abschnitt zu/von dem zweiten Benutzer ausgelegt ist;
**dadurch gekennzeichnet, dass** die Zuweisungseinheit ausgelegt ist, um anfänglich einen ersten Abschnitt und einen zweiten Abschnitt eines vorbestimmten Initialisierungsbandes des verfügbaren Spektrums jeweils zu einem ersten Benutzer und einem zweiten Benutzer zuzuweisen und um anschließend den zugewiesenen ersten und zweiten Abschnitt auf einen anderen ersten und zweiten Abschnitt außerhalb des vorbestimmten Initialisierungsbandes umzuändern.

2. Verteilungspunkteinheit nach Anspruch 1, wobei sich der zugewiesene erste Abschnitt nicht mit dem zugewiesenen zweiten Abschnitt überschneidet; und wobei der zugewiesene erste Abschnitt und der zugewiesene zweite Abschnitt für nachgelagerten und vorgelagerten digitalen Datenverkehr verwendet werden.

3. Verteilungspunkteinheit nach einem beliebigen der Ansprüche 1-2, wobei die Zuweisungseinheit ausgelegt ist, um eine Verstärkung von mindestens einem Träger, der in dem zugewiesenen ersten Abschnitt beinhaltet ist, auf einen ersten vorbestimmten Wert festzulegen, und um eine Verstärkung von mindestens einem Träger außerhalb des zugewiesenen ersten Abschnitts auf einen zweiten vorbestimmten Wert festzulegen, um den Bereich des zugewiesenen ersten Abschnitts dem ersten Benutzer anzuzeigen.

4. Verteilungspunkteinheit nach einem beliebigen der Ansprüche 1-3, wobei die Zuweisungseinheit ausgelegt ist, um von mindestens einem Benutzer der besagten Vielzahl von Benutzern eine eindeutige Benutzeridentifikation zu empfangen; und wobei die besagte Zuweisungseinheit ausgelegt ist, um das besagte anfängliche Zuweisen durch Bereitstellen eines Symbols eines robusten Verwaltungskanals (robust management channel, RMC) für den besagten Benutzer durchzuführen, wobei das besagte RMC-Symbol einen Benutzeridentifikator basierend auf der besagten eindeutigen Benutzeridentifikation enthält, wobei der Benutzeridentifikator von dem besagten mindestens einen Benutzer erkennbar ist, so dass der besagte mindestens eine Benutzer einem vordefinierten Abschnitt des Spektrums zugewiesen wird.

5. Verteilungspunkteinheit nach einem beliebigen der vorstehenden Ansprüche, wobei die Zuweisungseinheit ausgelegt ist, um den zugewiesenen ersten Abschnitt und/oder den zugewiesenen zweiten Abschnitt umzuändern; wobei die Zuweisungseinheit vorzugsweise ausgelegt ist, um Eingabedaten zu sammeln, die vorzugsweise Signal-Rausch-Verhältnis-Parameter und/oder Datenratenanfragen von dem ersten und dem zweiten Benutzer der Vielzahl von Benutzern umfassen, und um den zugewiesenen ersten und/oder zweiten Abschnitt des Spektrums basierend auf den gesammelten Eingabedaten umzuändern.

6. Verteilungspunkteinheit nach einem beliebigen der vorstehenden Ansprüche, wobei die Zuweisungseinheit ausgelegt ist, um in einem ersten Schritt ein Zwischenband des verfügbaren Spektrums zu dem besagten ersten Benutzer und dem besagten zweiten Benutzer zuzuweisen und um in einem zweiten Schritt einen ersten Abschnitt des besagten Zwischenbandes zu dem ersten Benutzer und einen zweiten Abschnitt des besagten Zwischenbandes zu dem zweiten Benutzer zuzuweisen.

7. Verteilungspunkteinheit nach einem beliebigen der vorstehenden Ansprüche, wobei die Zuweisungseinheit ausgelegt ist, um eine Reihe von Pilottönen auszuwählen, um die besagte Reihe von Pilottönen an die besagte Vielzahl von Benutzern zu senden.

8. Verfahren zur Verwendung diskreter Mehrtontechnologie in Verbindung mit einem verdrahteten, gemeinsam genutzten Medium, das zu einem verfügbaren Spektrum zugehörig ist, das mit einer Vielzahl von Benutzern (300) verbunden ist, umfassend:
- Zuweisen eines ersten Abschnitts des verfügbaren Spektrums zu einem ersten Benutzer der besagten Vielzahl von Benutzern und eines zweiten Abschnitts des verfügbaren Spektrums zu einem zweiten Benutzer der besagten Vielzahl von Benutzern;
- Codieren und Decodieren von digitalen Daten, unter Verwendung diskreter Mehrtontechnologie;
- Senden und Empfangen von codierten digitalen Daten über den ersten Abschnitt zu/von dem ersten Benutzer und über den zweiten Abschnitt zu/von dem zweiten Benutzer;
**dadurch gekennzeichnet, dass** das besagte Zuweisen anfängliches Zuweisen eines ersten Abschnitts und eines zweiten Abschnitts eines vorbestimmten Initialisierungsbandes des Spektrums jeweils zu einem ersten Benutzer und einem zweiten Benutzer umfasst; und anschließendes Umändern des zugewiesenen ersten und zweiten Abschnitts auf einen anderen ersten und zweiten Abschnitt außerhalb des vorbestimmten Initialisierungsbandes.

9. Verfahren nach Anspruch 8, weiterhin umfassend das Empfangen, von mindestens einem Benutzer der besagten Vielzahl von Benutzern, einer eindeutigen Benutzeridentifikation; und wobei das besagte anfängliche Zuweisen das Bereitstellen eines Symbols eines robusten Verwaltungskanals (RMC) für den besagten Benutzer umfasst, wobei das besagte RMC-Symbol einen Benutzeridentifikator basierend auf der besagten eindeutigen Benutzeridentifikation enthält, wobei der Benutzeridentifikator von dem besagten mindestens einen Benutzer erkennbar ist, so dass der besagte mindestens eine Benutzer einem vordefinierten Abschnitt des Spektrums zugewiesen wird.

10. Verfahren nach Anspruch 8 oder 9, weiterhin umfassend das Sammeln von Eingabedaten von mindestens dem ersten und dem zweiten Benutzer der Vielzahl von Benutzern und das Umändern des ersten Abschnitts und/oder des zweiten Abschnitts basierend auf den gesammelten Eingabedaten.

11. Kundenendgerät (300), um über ein verdrahtetes, gemeinsam genutztes Medium mit einer Verteilungspunkteinheit (100) verbunden zu werden, wobei das besagte Kundenendgerät ausgelegt ist, um
- einen Abschnitt des verfügbaren Spektrums von der besagten Verteilungspunkteinheit zugewiesen zu bekommen;
- digitale Daten zu codieren und decodieren, unter Verwendung diskreter Mehrtontechnologie; und
- codierte digitale Daten über den zugewiesenen Abschnitt zu/von der Verteilungspunkteinheit zu senden und empfangen; und
**dadurch gekennzeichnet, dass** es ausgelegt ist, um anfänglich einem Abschnitt eines vorbestimmten Initialisierungsbandes des verfügbaren Spektrums zugewiesen zu werden; und um anschließend einem anderen Abschnitt außerhalb des vorbestimmten Initialisierungsbandes zugewiesen zu werden.

12. Kundenendgerät nach Anspruch 11, weiterhin ausgelegt, um eine eindeutige Benutzeridentifikation an die besagte Verteilungspunkteinheit zu senden; und um einen Benutzeridentifikator basierend auf einer eindeutigen Benutzeridentifikation in einem Signal von der besagten Verteilungspunkteinheit zu erkennen.

13. Kundenendgerät nach Anspruch 11 oder 12, weiterhin ausgelegt, um von der Verteilungspunkteinheit eine Reihe von Pilottönen zu empfangen, um mindestens einen Pilotton aus der besagten Reihe auszuwählen; und/oder
wobei das Kundenendgerät ausgelegt ist, um einen Abschnitt des verfügbaren Spektrums zugewiesen zu bekommen durch: Empfangen von Verstärkungseinstellerdaten eines Trägers von der DPU, Anordnen des besagten Trägers in einer überwachten Tonreihe, wenn die besagten empfangenen Verstärkungseinstellerdaten ein vorbestimmtes Kriterium erfüllen, das angibt, dass der Träger mit dem zuzuweisenden Abschnitt ist; Aufbauen eines Entzerrers für den besagten Träger; und Anfordern von Bitloading für den besagten Träger.

14. System, umfassend mindestens eine Verteilungspunkteinheit nach einem beliebigen der Ansprüche 1-7, ein verdrahtetes, gemeinsam genutztes Medium, vorzugsweise ein Koaxialkabel, und eine Vielzahl von Kundenendgeräten nach einem beliebigen der Ansprüche 11-13, wobei das verdrahtete, gemeinsam genutzte Medium die mindestens eine Verteilungspunkteinheit mit der Vielzahl von Kundenendgeräten verbindet.

15. Digitales Datenspeichermedium, auf dem ein maschinenausführbares Programm von Befehlen codiert ist, um einen beliebigen der Schritte des Verfahrens nach einem beliebigen der Ansprüche 8-10 durchzuführen.

## Revendications

1. Unité de point de distribution (100) utilisant une technologie de multitonalité discrète, ladite unité de point de distribution étant configurée pour se connecter à un support filaire partagé (200) associé à un spectre disponible, ledit support filaire partagé connectant ladite unité de point de distribution à une pluralité d'utilisateurs (300), ladite unité de point de distribution comprenant :
- une unité d'attribution (101) configurée pour attribuer une première partie du spectre disponible à un premier utilisateur parmi ladite pluralité d'utilisateurs et une deuxième partie du spectre disponible à un deuxième utilisateur parmi ladite pluralité d'utilisateurs ;
- une unité d'envoi et de réception (102) configurée pour coder et décoder des données numériques, en utilisant une technologie de multitonalité discrète, et configurée pour envoyer/recevoir des données numériques codées sur la première partie attribuée vers le/à partir du premier utilisateur et sur la deuxième partie attribuée vers le/à partir du deuxième utilisateur ;
**caractérisée en ce que** l'unité d'attribution est configurée pour attribuer initialement une première partie et une deuxième partie d'une bande d'initialisation prédéterminée du spectre disponible à un premier utilisateur et à un deuxième utilisateur, respectivement, et pour modifier par la suite la première et la deuxième parties attribuées en d'autres première et deuxième parties en dehors de la bande d'initialisation prédéterminée.

2. Unité de point de distribution selon la revendication 1, dans laquelle la première partie attribuée ne chevauche pas la deuxième partie attribuée ; et dans laquelle la première partie attribuée et la deuxième partie attribuée sont utilisées pour un trafic de données numériques descendant et montant.

3. Unité de point de distribution selon l'une quelconque des revendications 1 et 2, dans laquelle l'unité d'attribution est configurée pour régler un gain d'au moins une porteuse incluse dans la première partie attribuée sur une première valeur prédéterminée, et pour régler un gain d'au moins une porteuse en dehors de la première partie attribuée sur une deuxième valeur prédéterminée, afin d'indiquer la plage de la première partie attribuée au premier utilisateur.

4. Unité de point de distribution selon l'une quelconque des revendications 1 à 3, dans laquelle l'unité d'attribution est configurée pour recevoir d'au moins un utilisateur parmi ladite pluralité d'utilisateurs une identification d'utilisateur unique ; et dans laquelle ladite unité d'attribution est configurée pour exécuter ladite attribution initiale en fournissant un symbole de canal de gestion robuste (RMC) audit utilisateur, ledit symbole RMC contenant un identifiant d'utilisateur basé sur ladite identification d'utilisateur unique, ledit identifiant d'utilisateur pouvant être reconnu par ledit au moins un utilisateur, de sorte qu'une partie prédéfinie du spectre soit attribuée audit au moins un utilisateur.

5. Unité de point de distribution selon l'une quelconque des revendications précédentes, dans laquelle l'unité d'attribution est configurée pour modifier la première partie attribuée et/ou la deuxième partie attribuée ; dans laquelle l'unité d'attribution est de préférence configurée pour collecter des données d'entrée, qui comprennent de préférence des paramètres de rapport signal sur bruit et/ou des exigences de débit de données, à partir du premier et du deuxième utilisateurs parmi la pluralité d'utilisateurs, et pour modifier la première et/ou la deuxième partie(s) attribuée(s) du spectre sur la base des données d'entrée collectées.

6. Unité de point de distribution selon l'une quelconque des revendications précédentes, dans laquelle l'unité d'attribution est configurée pour attribuer dans une première étape une bande intermédiaire du spectre disponible audit premier utilisateur et audit deuxième utilisateur et pour attribuer dans une deuxième étape une première partie de ladite bande intermédiaire au premier utilisateur et une deuxième partie de ladite bande intermédiaire au deuxième utilisateur.

7. Unité de point de distribution selon l'une quelconque des revendications précédentes, dans laquelle l'unité d'attribution est configurée pour choisir un ensemble de tonalités pilotes, pour envoyer ledit ensemble de tonalités pilotes à ladite pluralité d'utilisateurs.

8. Procédé pour utiliser une technologie de multitonalité discrète en relation avec un support filaire partagé associé à un spectre disponible, qui est connecté à une pluralité d'utilisateurs (300), comprenant les étapes suivantes ;
- attribuer une première partie du spectre disponible à un premier utilisateur parmi ladite pluralité d'utilisateurs et une deuxième partie du spectre disponible à un deuxième utilisateur parmi ladite pluralité d'utilisateurs ;
- coder et décoder des données numériques, en utilisant une technologie de multitonalité discrète ;
- envoyer/recevoir des données numériques codées sur la première partie vers le/à partir du premier utilisateur et sur la deuxième partie vers le/à partir du deuxième utilisateur ;
**caractérisé en ce que** ladite attribution comprend l'attribution initiale d'une première partie et d'une deuxième partie d'une bande d'initialisation prédéterminée du spectre à un premier utilisateur et à un deuxième utilisateur, respectivement ; et la modification par la suite de la première et de la deuxième parties en d'autres première et deuxième parties en dehors de la bande d'initialisation prédéterminée.

9. Procédé selon la revendication 8, comprenant en outre la réception à partir d'au moins un utilisateur parmi ladite pluralité d'utilisateurs d'une identification d'utilisateur unique ; et dans lequel ladite attribution initiale comprend la fourniture d'un symbole de canal de gestion robuste (RMC) audit utilisateur, ledit symbole RMC contenant un identifiant d'utilisateur basé sur ladite identification d'utilisateur unique, ledit identifiant d'utilisateur pouvant être reconnu par ledit au moins un utilisateur, de sorte qu'une partie prédéfinie du spectre soit attribuée audit au moins un utilisateur.

10. Procédé selon la revendication 8 ou 9, comprenant en outre la collecte de données d'entrée à partir d'au moins les premier et deuxième utilisateurs parmi la pluralité d'utilisateurs et la modification de la première partie et/ou de la deuxième partie sur la base des données d'entrée collectées.

11. Équipement des locaux du client (300) destiné à être connecté par l'intermédiaire d'un support filaire partagé à une unité de point de distribution (100), ledit équipement des locaux du client étant configuré pour
- qu'une partie du spectre disponible lui soit attribuée par ladite unité de point de distribution ;
- coder et décoder des données numériques, en utilisant une technologie de multitonalité discrète ; et
- envoyer/recevoir des données numériques codées sur la partie attribuée vers/à partir de l'unité de point de distribution ; et
**caractérisé en ce qu'il** est configuré pour qu'une partie d'une bande d'initialisation prédéterminée du spectre disponible lui soit attribuée initialement ; et pour qu'une autre partie en dehors de la bande d'initialisation prédéterminée lui soit attribuée par la suite.

12. Équipement des locaux du client selon la revendication 11, étant en outre configuré pour envoyer une identification d'utilisateur unique à ladite unité de point de distribution ; et pour reconnaître un identifiant d'utilisateur sur la base d'une identification d'utilisateur unique dans un signal provenant de ladite unité de point de distribution.

13. Équipement des locaux du client selon la revendication 11 ou 12, étant en outre configuré pour recevoir à partir de l'unité de point de distribution un ensemble de tonalités pilotes, pour choisir au moins une tonalité pilote dudit ensemble ; et/ou dans lequel l'équipement des locaux du client est configuré pour qu'une partie du spectre disponible lui soit attribuée : en recevant des données de réglage du gain d'une porteuse provenant de la DPU, en plaçant ladite porteuse dans un ensemble de tonalités surveillées si lesdites données de réglage du gain reçues satisfont un critère prédéterminé indiquant que la porteuse est avec la partie à attribuer ; en développant un égaliseur pour ladite porteuse ; et en demandant un chargement de bits pour ladite porteuse.

14. Système comprenant au moins une unité de point de distribution selon l'une quelconque des revendications 1 à 7, un support filaire partagé, de préférence un câble coaxial et une pluralité d'équipements des locaux du client selon l'une quelconque des revendications 11 à 13, dans lequel le support filaire partagé connecte l'au moins une unité de point de distribution à la pluralité d'équipements des locaux du client.

15. Support de stockage de données numériques codant un programme d'instructions exécutable par une machine pour exécuter l'une quelconque des étapes du procédé selon l'une quelconque des revendications 8 à 10.
